(19) Europäisches Patentamt
European Patent Office
Office européen des brevets

(11) Veröffentlichungsnummer: **0 224 847 B1**

(12) **EUROPÄISCHE PATENTSCHRIFT**

(45) Veröffentlichungstag der Patentschrift: **08.09.93**

(51) Int. Cl.5: **C08K 5/13**, C08L 77/00, C08K 3/00, C08K 7/00

(21) Anmeldenummer: **86116335.0**

(22) Anmeldetag: **25.11.86**

# (54) Verstärkte Polyamide mit verbessertem Fliessverhalten.

(30) Priorität: **06.12.85 DE 3543116**
**29.03.86 DE 3610595**

(43) Veröffentlichungstag der Anmeldung:
**10.06.87 Patentblatt 87/24**

(45) Bekanntmachung des Hinweises auf die Patenterteilung:
**08.09.93 Patentblatt 93/36**

(84) Benannte Vertragsstaaten:
**DE ES FR GB IT NL**

(56) Entgegenhaltungen:
**DE-A- 3 248 329**
**GB-A- 1 203 283**
**US-A- 2 374 576**

(73) Patentinhaber: **BAYER AG**

**D-51368 Leverkusen(DE)**

(72) Erfinder: **Meyer, Rolf-Volker, Dr.**
**Buchheimer Strasse 23**
**D-4150 Krefeld 1(DE)**
Erfinder: **Dhein, Rolf, Dr.**
**Deswatinesstrasse 30**
**D-4150 Krefeld 1(DE)**
Erfinder: **Michael, Dietrich, Dr.**
**Deswatinesstrasse 57**
**D-4150 Krefeld 1(DE)**
Erfinder: **Füllmann, Heinz-Josef, Dr.**
**Am Schneeberg 31**
**D-5653 Leichlingen 2(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

## Beschreibung

Gegenstand der Erfindung sind thermoplastisch verarbeitbare, anorganische Verstärkungsstoffe enthaltende Polyamidformmassen, die spezielle Polyphenole enthalten.

Das bekannte hochwertige Eigenschaftsniveau der thermoplastisch verarbeitbaren Polyamide hängt wesentlich von den zwischen verschiedenen Carbonamidgruppen wirksamen Wasserstoffbrücken ab. Auch die durch die Polarität der Carbonamidgruppen bedingte Hydrophilie hat darauf einen großen Einfluß, da sie eine deutlich meßbare Wasseraufnahme sowohl bei Wasserlagerung als auch im Normklima (siehe z.B. Kunststoffhandbuch Band VI, Polyamide, Carl-Hanser-Verlag, München, 1966, S. 458 ff) verursacht.

So hängt z.B. die Schlagzähigkeit von Formkörpern aus Polyamiden erheblich vom Wassergehalt der Formkörper ab. Im wasserfreien Zustand, z.B. nach der Herstellung der Formkörper durch Spritzgießen, sind besonders die aus leicht fließenden und damit leicht verarbeitbaren Polyamiden mit mittleren Molekulargewichten hergestellten Formkörper relativ empfindlich gegen Schlagbeanspruchung. Dies gilt besonders für Formkörper aus teilkristallinen Polyamiden.

Durch das Konditionieren mit Wasser kann die Zähigkeit dieser Formkörper zwar deutlich verbessert werden. Es tritt jedoch parallel dazu eine Weichmachung der Produkte ein, die besonders deutlich durch eine drastische Verminderung der Steifigkeit, gemessen durch den E-Modul, zu beobachten ist.

Für viele Einsatzgebiete, z.B. für Werkzeuggehäuse, Radkappen, Autotürgriffe oder auch Fensterprofile oder Fahrradrahmen ist dabei die Steifigkeit und Härte von Polyamiden selbst zu gering und durch die hohe Abhängigkeit vom Wassergehalt auch zu wenig konstant.

Um dies zu verbessern, werden seit langem Polyamide mit anorganischen Verstärkungsstoffen, vorzugsweise mit Glasfasern oder mineralischen Füllstoffen ausgerüstet.

Die durch die anorganischen Verstärkungsstoffe erzielte Erhöhung von Steifigkeit, Härte, Wärmeformbeständigkeit und Dimensionsstabilität (siehe z.B. DE 32 48 329) wird jedoch in aller Regel durch Nachteile erkauft, insbesondere durch eine vermiderte Fleißfähigkeit - besonders bei faserförmigen Verstärkungsstoffen - wodurch die Verarbeitbarkeit erschwert wird.

Nicht nur diese Nachteile steigen mit der Menge anorganischer Verstärkungsstoffe, sondern es wird auch mit steigendem Anteil an anorganischen Verstärkungsstoffen schwieriger, Formteile mit störungsfreien Oberflächen zu erzeugen.

Es besteht somit ein Bedarf an mit anorganischen Verstärkungsstoffen ausgerüsteten Polyamidformmassen, die ein verbessertes Fließverhalten und damit eine erleichterte Verarbeitbarkeit und eine höhere Steifigkeit aufweisen.

In der Schrift US 2 374 576 sind Polyphenole als Zusatz zu Polyamiden bekannt gemacht worden, die als Weichmacher für Polyamide eingesetzt werden. Mit der Funktion als Weichmacher ist jedoch in der Regel eine Senkung des E-Moduls der Formkörper verbunden.

Überraschend wurde nunmehr gefunden, daß man die obengenannten Nachteile überwinden und die Fließfähigkeit von mit anorganischen Verstärkungsstoffen ausgerüsteten Polyamidformmassen dadurch drastisch verbessern kann, indem man die Formmassen mit speziellen Polyphenolen modifiziert. Dies gilt insbesondere für Polyamidformmassen, die mit Glasfasern und/oder mineralischen verstärkungsfüllstoffen ausgerüstet sind.

Gegenstand der Erfindung sind daher thermoplastisch verarbeitbare, mit anorganischen Verstärkungsstoffen ausgerüstete Polyamidformmassen, die dadurch gekennzeichnet sind, daß sie 3 bis 25 Gew.-%, bezogen auf die Polyamidmenge, Bisphenole der allgemeinen Formel (I) enthalten

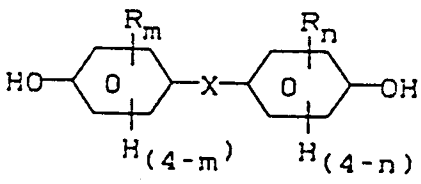

wobei

- m und n: unabhängig voneinander, ganze Zahlen von 0 bis 4, vorzugsweise 0, 1, 2 besonders bevorzugt 0, bedeuten;
- R: für eine Methyl- und Ethylgruppe, vorzugsweise eine Methylgruppe stehen
- X: eine chemische Bindung oder ein bivalenter, aliphatischer $C_1$-$C_3$- oder cyclo-aliphatischer $C_5$-$C_6$-Kohlenwasserstoffrest oder ein Brückenglied O, S, SO, $SO_2$, CO bzw. $-O(CH_2)_pO-$ mit

p = 2 oder 4 ist,

mit der Maßgabe, daß die Summe der aliphatischen C-Atome aller an einen Phenolring gebundenen Reste R <6, vorzugsweise <3 ist.

X ist bevorzugt eine chemische Bindung, O, $SO_2$, besonders bevorzugt $-CH_2-$, $-C(CH_3)_2-$ oder $-SO_2-$.

Beispiele für die erfindungsgemäß einzusetzenden Bisphenol-Gruppen sind:

Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfoxide
Bis-(hydroxyphenyl)-sulfone und
α,α-Bis-(hydroxyphenyl)-diisopropylbenzole.

Erfindungsgemäß einzusetzende Vertreter der genannten Gruppen von Bisphenolen sind:

4,4'-Dihydroxydiphenyl, gegebenenfalls im Gemisch mit
2,4'-Dihydroxydiphenyl
4,4'-Dihydroxy-3,3' ,5,5'-tetramethyldiphenyl
4,4'-Dihydroxy-3,3'-dimethylphenyl
Bis-(4-hydroxyphenyl)-methan
Bis-(4-hydroxy-3,5-dimethylphenyl)-methan
Bis-(4-hydroxyphenyl)-ethan
2,2-Bis-(4-hydroxyphenylpropan ("Bisphenol A")
2,2-Bis-(4-hydroxyphenyl-3,5-dimethylphenyl)-propan
2,2-Bis-(4-hydroxy-3,3'-dimethylphenyl)-propan
1,1-Bis-(4-hydroxyphenyl)-cyclohexan
1,1-Bis-(4-hydroxy-3,5-dimethylphenyl)-cyclohexan
Bis-(4-hydroxyphenyl)-sulfon
Bis-(4-hydroxy-3,3'-dimethylphenyl)-sulfon
Bis-(4-hydroxy-3,3-dimethylphenyl)-sulfon
Bis-(4-hydroxyphenyl)-sulfid
Bis-(4-hydroxy-3,5-dimethylphenyl)-sulfid
Bis-(4-hydroxy-3,5-dimethylphenyl)-sulfid
Bis-(4-hydroxyphenyl)-oxid
Bis-(4-hydroxy-3,5-dimethylphenyl)-oxid
Bis-(4-hydroxyphenyl)-keton
Bis-(4-hydroxy-3,5-dimethylphenyl)-keton
Bis-(4-hydroxy-3,3'-diethylphenyl)-propan,

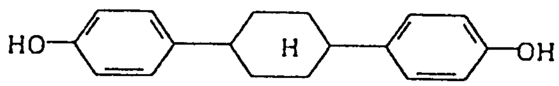

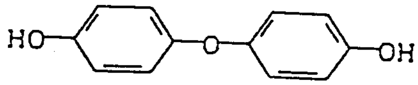

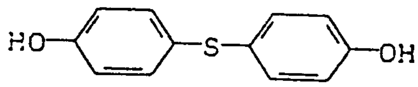

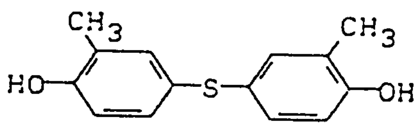

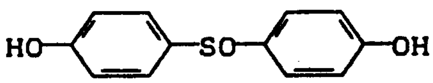

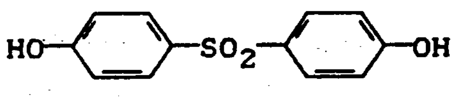

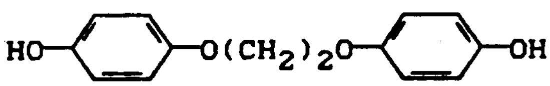

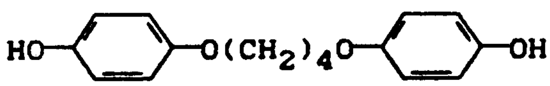

Besonders geeignete Bisphenole sind:
Bis-(4-hydroxyphenyl)-methan

Bis-(4-hydroxy-3,5-dimethylphenyl)-methan
2,2-Bis-(4-hydroxyphenyl)-propan
2,2-Bis-(4-hydroxy-3,5-dimethylphenyl)-propan
2,2-Bis-(4-hydroxy-3,3′-dimethylphenyl)-propan
1,1-Bis-(4-hydroxyphenyl)-cyclohexan
Bis-(4-hydroxyphenyl)-sulfon
Bis-(4-hydroxy-3,5-dimethylphenyl)-sulfon
Bis-(4-hydroxyphenyl)-sulfid.

Die genannten Bisphenole können allein oder in Gemischen eingesetzt werden.

Ganz besonders bevorzugt sind
Bis-(4-hydroxyphenyl)-methan und
Bis-(4-hydroxyphenyl)-propan.

Die letztgenannten Produkte können auch in ihrer Rohqualität, d.h. verunreinigt mit den entsprechenden 2,4-Isomeren sowie mit kleinen Mengen Bisphenolen mit Indan-Struktur, Chromanstruktur und auch den homologen Dreikerntrisphenolen eingesetzt werden.

Der Einsatz von Phenolen zur Verbesserung spezieller Eigenschaften von Polyamiden ist zwar seit langem bekannt.

So werden sterisch gehinderte Phenole, d.h. in mindestens einer, vorzugsweise in allen o-Stellungen zur phenolischen OH-Gruppe mit $\geqq C_3$ Gruppen (z.B. mit t-Butyl, Cyclohexyl) substituierte Phenole als Wärmestabilisatoren in Polyamiden verwendet.

Diese Produkte zeigen jedoch wegen ihrer sterischen Hinderungen und wegen des hohen Anteils aliphatischer C-Atome in den Phenolmolekülen in höheren Konzentrationen Verträglichkeitsprobleme (Ausschwitzen!) und sind zudem recht kostspielig.

In der DOS 1 769 662 wurden spezielle Phenole eingesetzt, die zu einer verbesserten Deformationsbeständigkeit von Fasern, Borsten und Garnen führen, wobei die Phenole mit weniger als 4 Benzolringen ebenfalls zwingend in einer oder beiden o-Stellungen zu den phenolischen OH-Gruppen sekundäre oder tertiäre Alkylgruppen, d.h. sterisch anspruchsvolle Gruppen, tragen müssen.

Auch diese Polyphenole sind im Sinne der Erfindung wenig brauchbar.

Die DOS 1 912 111 beschreibt weichgemachte Polyamide, die als Weichmacherkomponenten Gemische aus Estern langkettiger Carbonsäuren und phenolischen Verbindungen enthalten.

In dieser wie in den vorgenannten anderen Schriften findet sich kein Hinweis auf verstärkte Polyamide. Statt des bekannten Weichmachereffektes tritt bei den erfindungsgemäß modifizierten Polyamiden sogar in vielen Fällen eine Erhöhung der Steifigkeit ein.

In der DOS 3 248 329 wird die Verwendung von Monophenolen zur Verminderung der Wasseraufnahme von teilkristallinen Polyamiden empfohlen.

Die dort genannten Monophenole neigen bei höheren Konzentrationen zum Ausschwitzen und zu Belagbildung, vermutlich auch wegen des geringen Gehaltes phenolischer Gruppen in den Monophenolen und führen auch zu meßbarem Verlust an Steifigkeit.

Als Polyamide können lineare Polykondensate aus Diaminen und Dicarbonsäuren wie 6,6-, 6,7-, 6,8-, 6,9-, 6,10-, 6,12-, 8,8-, 12,12-Polyamid aus Aminosäuren bzw. den entsprechenden Lactamen mit mindestens 5 C-Atomen, wie z.B. $\epsilon$-Caprolactam, Laurinlactam oder Polykondensate aus aromatischen Dicarbonsäure wie Isophthalsäure, Terephthalsäure mit Diaminen wie Hexamethylendiaminen, Octamethylendiamin, aus araliphatischen Ausgangsstoffen wie m- oder p-Xylylendiaminen und Adipinsäure, Korksäure, Sebazinsäure, Polykondensate auf Basis von alicyclischen Ausgangsstoffen wie Cyclohexandicarbonsäure, Cyclohexandiessigsäure, Diamino-dicyclohexylmethanen, Isophorondiamin verwendet werden.

Vorzugsweise werden teilkristalline Polyamide verwendet, besonders bevorzugt PA-6 und PA-6,6, insbesondere mit relativen Viskositäten (gemessen in 1 % Lösung in m-Kresol bei 25° C) von 1,6 bis 2,5 bei amorphen sowie von 2,5 bis 5,0, bzw. von 2,7 bis 4,5, bei den teilkristallinen Polyamiden.

Die anorganische Verstärkungskomponente ist in 5 bis 50 Gew.-% bezogen auf die Menge Polyamid in der Formmasse enthalten.

Als anorganische Verstärkungsmaterialien eignen sich eine Vielzahl von bekannten Stoffen mit verschiedener chemischer Zusammensetzung und verschiedenen Teilchenformen bzw. Teilchengeometrien.

So können die Teilchen überwiegend die Gestalt von Kugeln, Würfeln, Quadern, Plättchen und insbesondere von Fasern haben. Eine diesbezügliche Übersicht findet sich in Kunststoffe 73, 511 ff. (1983).

Ihrer chemischen Natur nach sind die anorganischen Verstärkungsstoffe überwiegend Carbonate, vorzugsweise $CaCO_3$ (Kreide, Dolomit, Calcit, Amolit), Silicate (Asbest, Kaolin, Talcum, Glimmer, Quarz, Wollastonit) oder Metalloxide (Aluminiumoxid/Aluminiumhydroxid, Tonerde), gegebenenfalls auch Metallpulver (z.B. Aluminium, Stahl, Kupfer).

Die Teilchengröße der Verstärkungsstoffe ist in weiten Bereichen variabel; die anorganischen Verstärkungsstoffe können nachbehandelt sein, z.B. um eine bessere Haftung zur Polyamidmatrix zu haben.

Die genannten Vertreter der anorganischen Verstärkungsstoffe können allein oder in Kombination von mehreren in den verstärkten Polyamiden enthalten sein.

Besonders bevorzugt werden Glasfasern, Glaskugeln (massive und Hohlkugeln), Kreide, Kaolin, Talk und/oder Wollastonit verwendet.

Eine besonders stark verbesserte Fließfähigkeit und damit erleichterte Verarbeitung wird mit dem Bisphenol in teilkristallinen Polyamiden, die faserförmige Verstärkungsstoffe enthalten, erzielt.

Zur Herstellung der erfindungsgemäßen Formmassen können die Polyamidkomponente, die anorganische Verstärkungskomponente und die Bisphenolkomponente oberhalb des Schmelzpunktes des Polyamids in beliebiger Reihenfolge miteinander vermischt werden. Dies kann z.B. unmittelbar nach der Herstellung des Polyamids durch Zumischen des Bisphenol-Modifikators zu der als Strang abzuspinnenden Schmelze erfolgen, wobei die Compoundierung mit den versteifenden anorganischen Komponenten dann nachträglich erfolgt. Vorzugsweise werden die erfindungsgemäß modifizierten Polyamide jedoch durch Mischen aller Ausgangskomponenten, d.h. des Polyamids, der die Steifigkeit erhöhenden anorganischen Verstärkungsstoffe und der Bisphenol-Komponente in üblichen Schneckenmaschinen in einem einzigen Arbeitsgang hergestellt.

Analog kann bei der zusätzlichen Einarbeitung von anderen Additiven, wie z.B. Farbstoffen oder Entformungshilfsmitteln verfahren werden.

Die Bisphenolkomponente kann dabei mit der Polyamid-Komponente schon gemeinsam in den Einfüllstutzen des Extruders eindosiert oder aber zu einem späteren Zeitpunkt während der Extrusion den zu extrudierenden Massen zugesetzt werden.

Zur Compoundierung eignen sich übliche bekannte Apparaturen. Doppelschneckenextruder werden bevorzugt eingesetzt.

Die erfindungsgemäßen, gut fließfähigen, verstärkten Polyamidformmassen zeichnen sich bei sonst im wesentlichen konstantem Eigenschaftsbild gegenüber vergleichbaren Formmassen, die keine Bisphenole enthalten, durch stark verbesserte Fließfähigkeit und bessere Verarbeitbarkeit sowie störungsfreie Oberflächen (weniger Fließnaht-Abbildungen bei großen Formteilen aus Werkzeugen mit mehreren Angüssen) aus. In Einzelfällen ist zusätzlich sogar eine Verbesserung der Stabilität gegen den Einfluß von Feuchtigkeitund anorganischen Salzen, Hitze und UV-Licht ("Wetterstabilität") zu erzielen, obwohl die erfindungsgemäß einzusetzenden Phenole nicht sterisch gehindert sind.

Die neuen Polyamidformmassen eignen sich besonders zur Herstellung von Formkörpern nach dem Spritzgießverfahren, insbesondere für großflächige und komplizierte Formteile, die sonst nur mit hohem technischem Aufwand bei der Verarbeitung mit Oberflächenstörungen oder oft gar nicht herstellbar sind.

Vorzugsweise eignen sich die Produkte für Anwendungen im Automobilbau (Karosserieteile, Radkappen, Türgriffe, Lüfterflügel) sowie z.B. für Bohrmaschinengehäuse oder Fahrradrahmen.

Die in den Beispielen angegebene Fließlänge wird wie folgt bestimmt:

Die Fließlänge ist ein Maß fur die Fließfähigkeit eines Produktes und damit für seine Verarbeitbarkeit; höhere Fließlänge bedeutet bessere Fließfähigkeit und damit kürzere Spritzcyclen.

Die Fließlänge wurde wie folgt bestimmt: In ein spezielles Werkzeug, das auf 90° gehalten wird, wird mittels einer Spritzgießmaschine, deren Zylindertemperatur 260° C beträgt, die zu untersuchende Probe mit einem Spritzdruck von 72 bar eingespritzt. Besonders leichtfließende Werkstoffe sind in der Lage, unter diesen Bedingungen des Werkzeug zu füllen, so daß man nachher eine 100 cm lange Spirale entnehmen kann. Weniger fließfähige Werkstoffe füllen unter den beschriebenen Bedingungen das Werkzeug nur teilweise; dann können infolge der vorzeitigen Erstarrung der Schmelze nur Spiralkörper von <100 cm Länge erhalten werden.

Als Fließlänge wird die Länge in cm angegeben, die 5 mal reproduziert wurde.

<u>Beispiel 1</u>

6,3 kg PA-6 mit einer $\eta$rel von 2,9 und 700 g Bisphenol A (10 Gew.-% bezogen auf Polyamid) werden getrennt in den vorderen Einfüllstutzen eines Doppelwellenextruders vom Typ ZSK 53 (Länge ca. 1,5 m) eindosiert und mit einem Durchsatz von 30 kg/h bei 270° C extrudiert.

In die Produktschmelze werden kontinuierlich über einen zweiten Einfüllstutzen, der sich 50 cm vor dem Extruderausgang befindet, 3,0 kg Glasfasern (Silenca® 8041) zudosiert und gemeinsam mit dem Polyamid und der Bisphenol-Komponente extrudiert, als Strang in ein Wasserbad abgesponnen und gehäckselt.

Das als Granulat vorliegende Produkt wird bis zu einem Wassergehalt <0,1 % getrocknet. Die Kraftaufnahme des mit konstanter Drehzahl laufenden Extruders betrug 20Å (bei 270° C). Die an Prüfkörpern gemessenen Produkteigenschaften sind in Tabelle 1 aufgeführt, ebenso die von Vergleichsprodukten ohne Bisphenol-Zusatz.

Beispiel 2-4

Beispiel 1 wird wiederholt mit dem Unterschied, daß jeweils die in der Tabelle 1 genannten Komponenten zur Produktherstellung eingesetzt werden.

Außer den Glasfasern werden alle Komponenten in den vorderen Einfüllstutzen des Extruders eindosiert.

Bei PA 6,6 betrug die Extrusionstemperatur 290° C. Die an den jeweilig erhaltenen Produkten bestimmten Eigenschaften sind in Tabelle 1 aufgeführt.

Tabelle 1: Produktzusammensetzungen (in Gew.-Teilen) und Eigenschaften

| Versuch | PA ($\eta$rel) Typ | Menge | Bisphenol Typ | Menge | Glasfaser | Kraftaufnahme im Extruder (A) | Fließlänge (cm) | E-Modul [N/mm²] a) | b) | Oberflächenqualität c) |
|---|---|---|---|---|---|---|---|---|---|---|
| Beispiel 1 | PA-6 (2,9) | 63 | I | 7 | 30 | 20 (270°C) | 74 | 8410 | 5670 | sehr gut |
| Vergleichsversuch 1 | PA-6 (2,9) | 70 | I | 0 | 30 | 26 (270°C) | 62 | 7640 | 5140 | gut |
| Beispiel 2 | PA-6 (2,9) | 62,5 | I | 15 | 30 | 15 (270°C) | 82 | 9350 | 6970 | sehr gut |
| Beispiel 3 | PA-6 (2,9) | 54,5 | II | 15 | 30 | 14 (270°C) | 90 | 9390 | 6880 | sehr gut |
| Beispiel 4 | PA-66 (3,0) | 63 | I | 7 | 30 | 15 (290°C) | 65 | 9550 | 7620 | sehr gut |
| Vergleichsversuch 2 | PA-66 (3,0) | 70 | I | 0 | 30 | 26 (290°C) | 42 | 8430 | n.b. | sehr gut |

I = Bisphenol A

II = 4,4-Dihydroxydiphenyl

a) spritzfrisch

b) nach Konditionierung (70 h in Wasser bei 23°C, dann 14 Tage im Normklima)

c) beurteilt an 10 cm Rundplatte

Beispiel 5

Ein mit 40 Gew.-% Kaolin mineral-verstärktes Polyamid-6 ($\eta$rel des PA: 2,9) wird wie in Beispiel 1 beschrieben gemeinsam mit 6 % Bisphenol A in dem Einfüllstutzen des Extruders dosiert, gemeinsam bei

260° C extrudiert, als Strang abgesponnen und granuliert.

Aus auf einen Wassergehalt <0,1 % getrocknetem Granulat werden Prüfkörper gespritzt, die die in Tabelle 2 genannten Eigenschaften haben.

Vergleichsversuch 3

entspricht Beispiel 5 ohne Zusatz von Bisphenol.

Beispiele 6-8

Wie in Beispiel 5 beschrieben, werden Produkte mit wechselnden Gehalten an mineralischen Verstärkungsstoffen und Bisphenolen hergestellt.

Die Eigenschaften der Produkte sind in Tabelle 2 aufgeführt.

Vergleichsversuch 4

wie Beispiel 6 ohne Bisphenol.

Beispiel 9

Beispiel 5 wird wiederholt mit dem Unterschied, daß 60 Gew.-Teile Polyamid-6 ($\eta$rel 2,9), 40 Gew.-Teile Kaolin und 6 Gew.-Teile Bisphenol unabhängig und gleichzeitig in den Extruder eindosiert und dann wie beschrieben weiterbehandelt werden.

Vergleichsversuch 5

Beispiel 1 wird wiederholt mit dem Unterschied, daß statt eines erfindungsgemäßen Bisphenols 7 Gew.-Teile von 4-Dodecylphenol eingesetzt werden.

Bei vergleichbarer Fließlänge beträgt der E-Modul (spritzfrisch) statt 8410 N/mm$^2$ nur 6120 N/mm$^2$, d.h. es erfolgt unerwünschte Weichmachung.

Tabelle 2: Zusammensetzung und Eigenschaften von mineral-verstärkten Polyamiden

| Beispiel | PA-Typ, ($\eta$rel) | Menge Gew.-Tle. | Bisphenol A Gew.-Tle. | Kaolin Gew.-Tle. | Kraftaufnahme im Extruder (A) | Fließlänge cm | E-Modul [N/mm$^2$] a) | E-Modul [N/mm$^2$] b) | Oberflächenqualität c) |
|---|---|---|---|---|---|---|---|---|---|
| Beispiel 5 | PA-6 (2,9) | 60 | 6 | 40 | 42 (260°C) | 42 | 5750 | 3490 | + |
| Beispiel 6 | PA-6 (2,9) | 60 | 12 | 40 | 20 (260°C) | 51 | 5960 | 3850 | ++ |
| Vergl.-Versuch 3 | PA-6 (2,9) | 60 | - | 40 | 60 (260°C) | 32 | 5450 | 2960 | - |
| Vergl.-Versuch 4 | PA-6 (2,9) | 70 | - | 30 | 42 (260°C) | 43 | 4540 | 2680 | - |
| Beispiel 7 | PA-6 (2,9) | 70 | 7 | 30 | 21 (260°C) | 58 | 5140 | 2850 | ++ |
| Beispiel 8 | PA-6 (2,9) | 70 | 14 | 30 | 14 (260°C) | 63 | 5420 | 2940 | ++ |
| Beispiel 9 | PA-6 (2,9) | 60 | 6 | 40 | 44 (260°C) | 40 | 5690 | 3450 | ++ |

a) und b) siehe Erläuterungen Tab. 1

c) beurteilt an 10 cm-Rundplatten

- \- mäßig, Weißflecken
- \+ gut, ohne Weißflecken
- \++ sehr gut, glänzende Oberflächen

## Patentansprüche

1. Thermoplastisch verarbeitbare, mit anorganischen Verstärkungsstoffen ausgerüstete Polyamidformmassen, dadurch gekennzeichnet, daß die Formmassen 3-25 Gew.-% (bezogen auf die Polyamidmenge) an Bisphenolen der Formel I

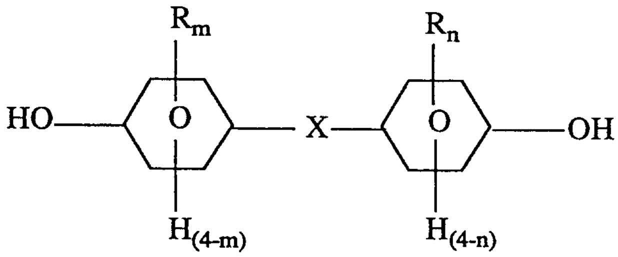

(I)

enthalten, wobei
R für eine $CH_3$-oder $C_2H_5$-Gruppe stehen, mit der Maßgabe, daß die Summe der aliphatischen C-Atome aller an die Phenolringe gebundenen Reste R< 6 ist,
m und n unabhängig voneinander ganze Zahlen von 0 bis 4 sind
X eine chemische Bindung oder ein bivalenter aliphatischer $C_1$-$C_3$- oder cycloaliphatischer $C_5$-$C_6$-Kohlenwasserstoffrest oder ein Brückenglied O, S, SO, $SO_2$, CO oder $-O-(CH_2)_p-O-$ mit p=2 oder 4 bedeutet
und die Menge der anorganischen Verstärkungsstoffe 5 bis 60 Gew.-%, bezogen auf die Polyamidmenge, beträgt.

2. Thermoplastisch verarbeitbare Formmassen nach Anspruch 1, dadurch gekennzeichnet, daß als Polyamide teilkristalline Polyamide eingesetzt werden.

3. Thermoplastisch verarbeitbare Formmassen nach Ansprüchen 1 und 2, dadurch gekennzeichnet, daß sie bis zu 60 Gew.-% bezogen auf die PA-Menge anorganische Verstärkungsstoffe aus der Klasse der
   - Carbonate
   - Silikate
   - Metalloxide oder
   - Metalle

   enthalten.

4. Thermoplastisch verarbeitbare Formmassen nach Ansprüchen 1-3, dadurch gekennzeichnet, daß die anorganischen Verstärkungsstoffe kugelförmig, plättchenförmig und/oder faserförmig sind.

5. Thermoplastisch verarbeitbare Formmassen nach Ansprüchen 1 bis 4, dadurch gekennzeichnet, daß sie als Verstärkungsstoffe Glasfasern, Glaskugeln, Kreide, Kaolin, Wollastonit und/oder Talkum enthalten.

6. Thermoplastische Formkörper nach Ansprüchen 1-5, dadurch gekennzeichnet, daß 6-25 Gew.-% der Bisphenole der Formel I eingesetzt werden.

7. Thermoplastische Formkörper nach Ansprüchen 1-6, dadurch gekennzeichnet, daß Bisphenole der Formel I mit m und n = O und X = $CH_2$, $C(CH_3)_2$, $SO_2$ eingesetzt werden.

8. Thermoplastisch verarbeitbare Formmassen nach Ansprüchen 1-7, dadurch gekennzeichnet, daß als Bisphenol Bisphenol A eingesetzt wird.

9. Formkörper aus thermoplastisch verarbeitbaren verstärkten Formmassen nach einem der Ansprüche 1-8.

## Claims

1. Thermoplastically processable polyamide moulding compounds treated with inorganic reinforcing materials, characterized in that the moulding compounds contain 3 to 25% by weight (based on the quantity of polyamide) of bisphenols corresponding to formula I

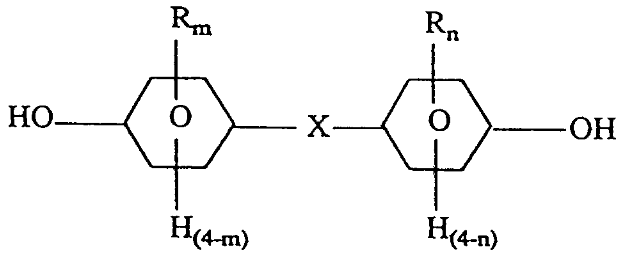 (I)

in which

R represents a $CH_3$ or $C_2H_5$ group, with the proviso that the sum of the aliphatic C atoms of all the substituents attached to the phenol rings is < 6,

m and n independently of one another are integers of 4 to 6,

X is an aliphatic bond or a divalent aliphatic $C_{1-3}$ or cycloaliphatic $c_{5-6}$ hydrocarbon radical or a bridge member O, S, SO, $SO_2$, CO or $-O-(CH_2)_p-O-$ with p = 2 or 4,

and the quantity of inorganic reinforcing materials is 5 to 60% by weight, based on the quantity of polyamide.

**2.** Thermoplastically processable moulding compounds as claimed in claim 1, characterized in that partly crystalline polyamides are used as the polyamides.

**3.** Thermoplastically processable moulding compounds as claimed in claims 1 and 2, characterized in that they contain up to 60% by weight, based on the quantity of PA, of inorganic reinforcing materials from the class of
- carbonates
- silicates
- metal oxides or
- metals.

**4.** Thermoplastically processable moulding compounds as claimed in claims 1 to 3, characterized in that the inorganic reinforcing materials are spherical, flake-like and/or fibrous.

**5.** Thermoplastically processable moulding compounds as claimed in claims 1 to 4, characterized in that they contain glass fibres, glass beads, chalk, kaolin, wollastonite and/or talcum as reinforcing materials.

**6.** Thermoplastic mouldings as claimed in claims 1 to 5, characterized in that the bisphenols of formula I are used in a quantity of 6 to 25% by weight.

**7.** Thermoplastic mouldings as claimed in claims 1 to 6, characterized in that bisphenols corresponding to formula I, in which m and n = 0 and X = $CH_2$, $C(CH_3)_2$, $SO_2$, are used.

**8.** Thermoplastically processable moulding compounds as claimed in claims 1 to 7, characterized in that bisphenol A is used as the bisphenol.

**9.** Mouldings of the thermoplastically processable reinforced moulding compounds claimed in any of claims 1 to 8.

## Revendications

**1.** Matières à mouler en polyamides contenant des matières renforçantes minérales et aptes au travail thermoplastique, caractérisées en ce qu'elles contiennent de 3 à 25 % en poids (par rapport à la quantité du polyamide), de bisphénols de formule I :

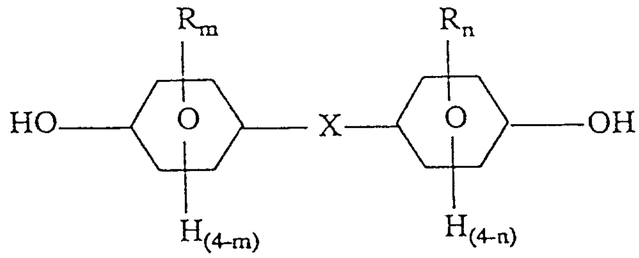

(I)

dans laquelle
R représente un groupe $CH_3$ ou $C_2H_5$, sous réserve que la somme des atomes de carbone aliphatiques de tous les radicaux R reliés aux cycles phénols est inférieure à 6, m et n représentent, indépendamment l'un de l'autre, des nombres entiers de 0 à 4, X représente une liaison chimique ou un radical hydrocarboné bivalent aliphatique en $C_1$-$C_3$ ou cycloaliphatique en $C_5$-$C_6$ ou un pont O, S, SO, $SO_2$, CO ou -O-$(CH_2)_p$-O- dans lequel p = 2 ou 4,
et la quantité de la matière renforçante minérale est de 5 à 60 % du poids du polyamide.

**2.** Matières à mouler aptes au travail thermoplastique selon la revendication 1, caractérisées en ce qu'elles contiennent en tant que polyamides des polyamides partiellement cristallins.

**3.** Matières à mouler aptes au travail thermoplastique selon revendications 1 et 2, caractérisées en ce qu'elles contiennent jusqu'à 60 % du poids du polyamide de matières renforçantes minérales de la classe des :
- carbonates,
- silicates,
- oxydes métalliques, ou
- métaux.

**4.** Matières à mouler aptes au travail thermoplastique selon revendications 1 à 3, caractérisées en ce que les matières renforçantes minérales sont à état de billes, de tablettes et/ou de fibres.

**5.** Matières à mouler aptes au travail thermoplastique selon revendications 1 à 4, caractérisées en ce qu'elles contiennent en tant que matières renforçantes des fibres de verte, des billes de verte, de la craie, du kaolin, de la wollastonite et/ou du talc.

**6.** Corps moulés thermoplastiques selon revendications 1 à 5, caractérisés en ce qu'ils contiennent de 6 à 25 % en poids des bisphénols de formule I.

**7.** Corps moulés thermoplastiques selon revendications 1 à 6, caractérisés en ce qu'ils contiennent des bisphénols de formule I dans laquelle m et n = 0, et X = $CH_2$, $C(CH_3)_2$, $SO_2$.

**8.** Matières à mouler aptes au travail thermoplastique selon revendications 1 à 7, caractérisées en ce qu'elles contiennent en tant que bisphénol du bisphénol A.

**9.** Corps moulés à partir des matières à mouler renforcées, aptes au travail thermoplastique, selon une des revendications 1 à 8.